(19) Europäisches Patentamt
European Patent Office
Office européen des brevets

(11) EP 2 377 612 A1

(12) **EUROPEAN PATENT APPLICATION**

(43) Date of publication:
**19.10.2011 Bulletin 2011/42**

(51) Int Cl.:
***B01J 20/12*** *(2006.01)* ***B01J 20/14*** *(2006.01)*
***B01J 20/32*** *(2006.01)* ***A01K 1/015*** *(2006.01)*

(21) Application number: **10160306.6**

(22) Date of filing: **19.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **SÜD-CHEMIE AG**
**80333 München (DE)**

(72) Inventors:
- **Ruf, Friedrich, Dr.**
  **84184 Tiefenbach-Ast (DE)**
- **Villaurrutia, Thomassiny Erik**
  **72410 Puebla (MX)**
- **Niembro, Jose Antonio Ortiz**
  **72590 Puebla (MX)**

(74) Representative: **Stolmár Scheele & Partner**
**Blumenstraße 17**
**80331 München (DE)**

# (54) Adsorbent for adsorption of basic compounds

(57) The invention relates to a clay litter product comprising a clay material and a mixture of acid and at least an aluminium salt deposited thereon, a method for producing the clay litter product as well as its use as litter in animal breeding. The clay litter product may significantly reduce ammonia concentration in Gasphase and aqueous samples.

EP 2 377 612 A1

## Description

The invention relates to a clay litter product, a method for producing said clay litter product and the use of said clay litter product for adsorption of basic compounds, in particular ammonia.

Commercial breeding of poultry is usually performed in poultry breeding houses, where large numbers of animals are kept in cages or as a group in pens. The excrements produced by the animals collect rapidly and due to the warmth and the moisture present in the breeding house start rapidly to decay. Since the excrements of poultry are rich in nitrogen compounds large amounts of ammonia are released that accumulate in the air inside the breeding house. The ammonia concentration can reach levels up to 90 ppm. The ammonia has a high alkaline character and easily forms complexes with metals like iron and aluminium. Birds show respiratory complications at ammonia concentrations of more than 25 ppm and at levels of more than 40 ppm the growth performance of young birds is reduced. Further, due to the weakening of the health of the birds by the impact of high ammonia concentrations a disease experienced by few animals can easily spread through a large number of other animals by contaminated litter which the birds ingest.

In order to create a favourable environment for the animals, poultry litter that also acts as an adsorbent for ammonia has been developed.

In US 5,960,743 is described a sulphuric acid-containing clay-based litter product useful in the control of ammonia generated by decaying excrement in poorly ventilated poultry breeding houses. A raw clay is contacted with sulphuric acid to produce an acidulated clay which is then applied to the poultry brooding house floor. The raw clays used for the clay litter product can be from the hormite mineral group, the smectite mineral group and mixtures thereof. The hormite group of minerals includes the palygorskite and sepiolite varieties which have silicate ring, ribbon or chain structures. The smectite mineral group includes the montmorillonites, nontronites, hectorite and saponite varieties, which are constituted by stacked layers of an octahedral sheet of alumina and one or more sandwiching tetrahedral sheets of silica. Other minerals not belonging to the hormite or smectite groups which also may be included in the raw clay are opal, apatite, calcite, feldspar, kaolinite, mica, quartz and gypsum, amongst others. According to a preferred embodiment montmorillonite clay is used as the raw clay. The sulfuric acid content of the acidulated clay is at least about 15 percent by weight and is preferably in the range of from about 25 to about 35 percent by weight. The acidulated clay product can be applied directly to the existing floor bedding or litter in pens of poultry breeding houses.

The object to be solved by the invention is to provide a clay litter product that has a high binding capacity for alkaline compounds, in particular nitrogen containing compounds, like ammonia, and further has a high drying capacity such that the amount of ammonia present in the atmosphere of a poultry breeding house can be kept at low levels such that the animals can be kept at good health and spreading of diseases can be diminished.

This object is solved by a clay litter product according to claim 1. Preferred embodiments of said clay litter product are defined in the depending claims.

The clay litter product according to the invention comprises a mixture of an acid and aluminium ions deposited onto a clay material. Without wishing to be bound by this theory the inventors believe that a synergistic effect is achieved by providing different mechanisms for adsorption of basic compounds in the same adsorbent. The acid compound in the adsorbent has a capacity for neutralizing basic compounds and transforming the same into an ionic compound having low volatility. Aluminium has a high binding capacity for nitrogen containing compounds, in particular ammonia by complex formation. It could be shown that ammonia concentration can be further reduced when additionally depositing an aluminium salt onto acidulated clay. Further, aluminium ions have a strong bactericidal effect and, therefore, slow down decay of the excrements and as a consequence reduce ammonia production.

According to the invention a clay litter product is provided comprising a clay material and a mixture of acid and at least an aluminium salt deposited thereon.

The clay material comprised in the clay litter product may be a raw clay or may be a clay activated by a corresponding activation procedure, e.g. by acid leaching of a raw clay to increase pore volume and specific surface area of the clay. A raw clay is understood to be a clay as mined from a natural source. Such raw clays have a composition and a crystal lattice as found in nature. Typical examples of a crystal lattice as found in raw clays from natural sources is a layered structure. Such alumosilicates comprise sheets formed of $AlO_4$ — and $SiO_4$—tetrahedra. Within a sheet each tetrahedron shares three of its vertex oxygen atoms with other tetrahedra forming a hexagonal array in two dimensions. The forth vertex is not shared with another tetrahedron and all unshared vertices point to the same side of the sheet. The tetrahedral sheets are bonded to octahedral sheets formed of aluminium or magnesium cations coordinated by six oxygen atoms. Depending on the way that tetrahedral and octahedral sheets are packaged into layers clays are categorized in 1:1 clays having only one tetrahedral and one octahedral sheet in each layer and 2:1 clays having two tetrahedral sheet and one octahedral sheet per layer.

The mined clay may be dried and milled but has not undergone a treatment with a chemical compound, in particular an acid. Preferably, raw clays are used as component of the clay litter product.

Preferably, clay materials having a high liquid uptake capacity are used in the clay litter product according to the invention.

According to an embodiment, the raw clay can be from the hormite mineral group, the smectite mineral group or may comprise mixtures of such clays. The hormite group of minerals includes palygorskite and sepiolite varieties. The smectite mineral group includes the montmorillonites, nontronites, hectorite, and saponite varieties. Such clay minerals may comprise other minerals in minor amounts of preferably less than 30 weight percent, particularly preferred less than 20 weight percent. Examples for such mineral components are feldspar, mica, quartz, apatite and gypsum, amongst others. However, also other clay minerals may be used.

Particularly preferred clay materials have a specific surface area (BET) of at least 180 $m^2/g$, particularly preferred have a surface area within the range of 190 to 250 $m^2/g$ and according to a further embodiment have a surface area within a range of 200 to 230 $m^2/g$. Further preferred are clay materials having a very large pore volume of at least 0.4 ml/g, more preferred 0.5 to 0.9 ml/g. Particular preferred as clay material are raw clays having a specific surface area and a pore volume within the above mentioned ranges.

For achieving thorough adsorption of basic compounds by the clay litter product according to the invention it is preferred to use clay materials having ion exchange capacity. According to a further preferred embodiment, the clay material comprised in the clay litter product according to the invention has a cation exchange capacity of at least 40 meq/100 g, according to a further embodiment has a cation exchange capacity of at least 45 meq/100 g. According to a preferred embodiment, the cation exchange capacity of the clay comprised in the clay litter product has a cation exchange capacity of less than 150 meq/100 g, according to a further embodiment has a cation exchange capacity of less than 100 meq/100 g and according to a still further embodiment has a cation exchange capacity of less than 70 meq/100 g.

Particularly preferred are raw clays from natural sources with a low sediment volume in water. According to an embodiment, the sediment volume of the clay in water is less than 15 ml/2 g, according to a further embodiment is less than 12 ml/2 g and according to a still further embodiment is less than 10 ml/2 g.

Particularly preferred are raw clays from natural sources that have a low sediment volume in water, a high pore volume, a high specific surface area and still have some cation exchange capacity. Preferably, the raw clays have a sediment volume in water, a pore volume, a specific surface area and a cation exchange capacity within the above mentioned ranges.

Recently, the valuable nature of a particular class of clays has been recognized. Such clays have an amorphous structure according to XRD data and further are characterized by a quite high content of $SiO_2$ and a low content of $Al_2O_3$. According to an embodiment, the raw clay comprised in the clay litter product according to the invention comprises silicium, calculated as $SiO_2$, in an amount of more than 60 wt%, according to a further embodiment of more than 65 wt% and according to a still further embodiment in an amount of at least 70 wt%. According to an embodiment the amount of silicium, comprised in the raw clay, calculated as $SiO_2$, is less than 90 wt%, according to a further embodiment is less than 85 wt% and according to a still further embodiment is less than 80 wt%.

The amount of aluminium contained in the raw clay comprised in the clay litter product according to the invention, calculated as $Al_2O_3$, is preferably less than 20 wt%, according to a further embodiment is less than 15 wt% and according to a still further embodiment is less than 12 wt%. According to an embodiment, the amount of aluminium, calculated as $Al_2O_3$, comprised in the raw clay is more than 5 wt%, according to a further embodiment is more than 7 wt%. All percentages refer to dry clay.

Without wishing to be bound by that theory, the inventors believe, that such raw clays have a structure comprising a rigid three-dimensional network formed of $SiO_2$ with very small particles of a layered alumosilicate embedded in the rigid $SiO_2$ network structure. This structure explains the high surface area and the large pore volume of the preferred raw clay which is similar to pore volumes and specific surface areas experienced with acid leached clays which also comprise a rigid network formed of $SiO_2$. The inclusion of small platelets of a layered alumosilicate within the rigid $SiO_2$ network structure would provide an explanation for the cation exchange capacity as measured for the preferred clay minerals which is considerably higher than measured for acid leached clays as used e.g. for oil bleaching. Such clays have an exceptionally high capacity for liquid uptake. Suitable clay materials are described e.g. in WO 2006/131136 and WO 2008/055675 Al.

Such preferred clays may also comprise iron in an amount, calculated as $Fe_2O_3$ of between 1 to 5 wt%, according to a further embodiment in a range of 2 to 3.5 wt%. Such iron ions are fixed in the crystal lattice of the clay and may not leached from the mineral by simply washing with water or highly diluted acid at room temperature. A diluted acid preferably is less than 1N and according to an embodiment has a normality in the range of 0.1 to 1N.

According to the invention, an acid is deposited onto the clay, preferably a mineral acid. Preferably, the mineral acid is selected from the group of hydrochloric acid, sulfuric acid and phosphoric acid, wherein sulfuric acid and hydrochloric acid are particularly preferred. Such mineral acids are readily accessible at low cost and in large amounts. The acid is present on the surface and within the pores of the clay. Particularly preferred the acid is comprised in the clay litter product in an amount of 0.5 to 10 wt%, according to an embodiment in an amount of 2 to 8 wt%. The amount of acid is calculated as concentrated acid, in particular as $HCl$, $H_2SO_4$ and $H_3PO_4$, respectively, in concentrated form (room temperature, 21°C) and the percentage refers to the weight of the dry clay.

The clay litter product further comprises an aluminium salt deposited on the clay. The aluminium ions comprised in the aluminium salt may be distinguished from aluminium comprised in the lattice of the clay material by the fact, that the aluminium salt deposited onto the clay may be extracted from the clay litter product by washing with water or diluted acid at room temperature. For determination of the amount of aluminium ions deposited onto the clay material, about 5 g of a sample may be added to about 250 ml of 0.1 HCl and the suspension is then stirred at room temperature for about 1 hour. After filtration the amount of aluminium ions dissolved from the sample may be determined by appropriate methods, e.g. ICP.

The aluminium salt deposited on the clay comprises $Al^{3+}$ ions as well as a suitable anion. The anion is preferably selected such that the aluminium salt is water soluble. Preferably, the aluminium salt comprises the same anion as the acid. Preferably the aluminium salt is selected from the group of aluminium chloride and aluminium sulfate. However, other aluminium salts may be used equivalently.

The amount of aluminium ions deposited onto the clay and extractable with water or diluted acid, calculated as $Al_2O_3$ and referring to the dry weight of the clay, preferably is at least 0.5 wt%, according to a further embodiment is at least 1.0 wt% and according to a still further embodiment is at least 5.0 wt%. According to an embodiment, the amount of aluminium ions, deposited onto the clay and extractable with water is less than 20 wt%, according to a further embodiment is less than 15 wt% and according to a still further embodiment is less than 12 wt%.

The inventors also have found that the adsorption of basic compounds, in particular ammonia, can be further improved when additionally an iron salt is deposited on the clay besides the aluminium salt. Iron salts may also form complexes with basic compounds, in particular ammonia, and may therefore further increase binding capacity of the clay litter product according to the invention for basic compounds, in particular ammonia. According to a preferred embodiment, therefore an iron salt is deposited on the clay. The iron salt preferably is present in the form of a salt comprising $Fe^{3+}$ ions. The iron salts deposited on the clay are extractable with water or diluted acid which may be a criterion for distinguishing iron salts deposited onto the clay from iron ions comprised in the crystal lattice of the clay. The iron salt preferably comprises an anion corresponding to acid deposited on the clay material. Preferred iron salts are iron chloride and iron sulfate. However, also other iron salts maybe used.

The amount of iron salt deposited on the clay, calculated as $Fe_2O_3$, preferably is at least 0.1 wt%, preferably is at least 0.4 wt% and according to a further embodiment is at least 1 wt%. According to an embodiment, the amount of the iron salt deposited on the clay, calculated as $Fe_2O_3$, is less than 10 wt%, and according to a further embodiment is less than 8 wt%. All percentages refer to the clay material comprised in the clay litter product and are calculated on the basis of the dry weight of the clay material.

Besides aluminium ions and iron ions further metal ions may be deposited onto the clay material in a small amount. According to an embodiment, the amount of further metal ions, calculated as most stable oxide at room temperature and referring to the dry weight of the clay is selected smaller than 10 wt.%, according to an embodiment is smaller than 5 wt.%, according to a still further embodiment is smaller than 2 wt.% and according to a still further embodiment is smaller than 1 wt.%. Such further metal ions are extractable with water or diluted acid at room temperature.

However, according to an embodiment, the metal ions deposited onto the clay material are essentially formed of only aluminium ions and iron ions.

The clay litter product preferably is provided in granular form, wherein the granules preferably have an average diameter ($D_{50}$) of at least 0.5 mm, preferably at least 1 mm, and according to an embodiment have a diameter of less than 10 mm, according to a further embodiment of less than 5 mm. The size of the granules may be determinate by sieving. The average diameter $D_{50}$ corresponds to a value wherein 50 wt% of the granules have a diameter of less than $D_{50}$ and 50 wt% of the granules have a diameter of more than $D_{50}$.

Due to the deposition of the acid and the salts the total pore volume of the clay litter product is smaller than of the clay comprised in the clay litter product. According to an embodiment the total pore volume of the clay litter product is within a range of 0.2 to 0.5 ml/g, according to a further embodiment is within a range of 0.21 to 0.4 ml/g.

The clay litter product is acidulous due to the presence of acid deposited on the clay. According to an embodiment, the free acidity of the clay litter product, determined as milligram KOH/g dry clay litter product, is at least 100 mg KOH/g and preferably is selected within a range of 105 to 150 mg KOH/g.

Before use as litter, the clay litter product preferably as a moisture content of less than 30 wt%, according to an embodiment of less than 20 wt%.

Besides the clay with the acid and the metal salts deposited thereon, the clay litter product may comprise further valuable components. According to an embodiment, the amount of clay material with acid and metal salt(s) deposited thereon corresponds to at least 80 wt%, according to a further embodiment to at least 90 wt% of the clay litter product. The amount of valuable component preferably is selected less than 20 wt%, according to a further embodiment is less than 10 wt% and according to a still further embodiment is within a range of 0.1 to 5 wt%.

A valuable component is understood to be a compound or a mixture of compounds that have a positive effect on the growth and/or health of animals, in particular poultry. Exemplary valuable compounds are nutritients, essential trace minerals, insecticides and antiparasites.

A further aspect of the invention is directed to a method for producing a clay litter product as described above. To obtain a clay litter product according to the invention, a clay material is provided, an acid is deposited onto the clay, and an aluminium salt is deposited onto the clay.

Preferred embodiments of the clay material, the acid and the aluminium salt have been described above. Reference is made to the corresponding passages.

According to a particular preferred embodiment an iron salt is additionally deposited on the clay.

To deposit the acid and the metal salts onto the clay material, the clay material is first provided in a suitable form. To allow an even distribution of the acid and the metal salts within the clay material, according to an embodiment, the clay material is provided in the form of larger particles, e.g. by breaking larger lumps of clay to particles of a diameter of within a range of 1 mm to 10 mm. However, according to another embodiment, the clay material is provided in the form of a fine powder having a medium particle size ($D_{50}$) of preferably within a range of 50 to 500 $\mu$m. The acid and the metal salts may then be deposited on the clay material, e.g. by spraying a solution of the acid and the metal salts onto the clay material. According to a further embodiment, the clay material may be provided in the form of a ductile mass and the other components of the clay litter product, in particular acid and metal salt(s), are mixed with the clay material by kneading.

The acid may be provided in concentrated or diluted form. Preferably, the acid is used in concentrated form. However, in case larger amounts of liquid are necessary for processing the clay material, the acid may be diluted. Preferably, the acid is used in liquid form.

The aluminium salt and, if present, the iron salt and further metal salts may be provided in solid form and may be mixed with the clay material e.g. by kneading or by concurrently milling the metal salts and the clay material. According to a further embodiment, the aluminium salt and, if present, the iron salt and further metal salts, are provided in form of a solution. A solution may be obtained by dissolving the aluminium salt and/or the iron salt and/or the further metal salts in water. Separate solutions for the aluminium salt and the iron salt and the further metal salts may be used. However, it is also possible to use a mixed solution of the aluminium salt and the iron salt and the further metal salts. According to a most preferred embodiment the aluminium salt and, if present, the iron salt and the further metal salts are dissolved in the acid and a combined solution of the acid, the aluminium salt and, if present, the iron salt and the further metal salts is deposited onto the clay material. According to a preferred embodiment, only aluminium and iron salts are deposited as metal salts onto the clay material.

Deposition of the acid and the metal salts onto the clay material may be performed in known ways. In particular, when the acid and the metal salts are provided in the form of a solution the solution may be sprayed onto the clay.

The acid, the aluminium salt and, if present, the iron salt and the further metal salts may be deposited onto the clay material one after the other. However, according to a preferred embodiment, the acid and the metal salts are sprayed onto the clay material simultaneously.

According to particularly preferred embodiment, an aqueous solution, comprising the acid and the metal salt (s) is used as a granulation liquid to form a granulate from the clay material.

Granulation may be performed in any known manner. According to an embodiment, the clay material is provided in a mixer, e.g. an Eirich mixer, in the form of a dry fine powder. The powder is moved e.g. by a suitable stirrer and a solution of the acid and the metal salt(s) is poured or sprayed onto the clay material while mixing is continued. The mixing speed is then adopted such that a granulate of suitable size and hardness is formed.

After deposition of the acid and the metal salts onto the clay material excess humidity may be removed, e.g. by heating the clay litter product or by blowing heated air onto the clay litter product while continuing mixing of the same.

According to an embodiment, the clay litter product comprises further valuable components as mentioned above. These components may be added before or during deposition of the acid and the metal salt(s) onto the clay material. According to a preferred embodiment, the further valuable components are added after deposition of the acid and the metal salt(s) onto the clay material. In a particular preferred embodiment, the further valuable components are added to the granulated clay material with the acid and the metal salts deposited thereon.

The clay litter product may then be packed into suitable packaging, e.g. a drum or a bag, to be shipped to a customer.

The clay litter product according to the invention has a high capacity for absorption of basic compounds, in particular basic gases, e.g. ammonia. A further aspect of the invention therefore is directed to the use of said clay litter product for adsorption of basic compounds.

The basic compound may be provided in gaseous form or may be provided in liquid form, preferably in form of a solution, in particular an aqueous solution or may be provided in the form of a suspension or a ductile mass, e.g. in the form of excrements.

The basic compound preferably comprises at least one nitrogen atom and in particular is an amine or ammonia.

The clay litter product according to the invention may absorb large amounts of basic compounds. The clay litter product therefore is suitable for reducing e.g. the ammonia concentration in a gas phase over a longer period of time, e.g. in an animal breeding house. According to an embodiment it is preferred that the basic compound is present in the surroundings of the clay litter product, in particular in a gas phase surrounding the clay litter product, in a concentration within a range of 1 to 100 ppmw. However, higher concentration of the basic compound is also possible.

According to a particular preferred embodiment the basic compound is produced in animal breeding, in particular in poultry breeding. Besides the high capacity for absorption of basic compounds, in particular ammonia, the clay litter product according to the invention also has a high capacity for adsorption of liquids. Further, due to the acidic nature and the high concentration of aluminium ions present on the clay, the clay litter product also has a disinfectant effect. By use of the clay litter product in pens or cages for young poultry it therefore is possible to improve the health of the young animals.

According to an embodiment, the clay litter is applied to a pen floor surface in an amount of 50 to 750 g/$m^2$.

The following non-limiting examples and comparative data further illustrate the invention with reference to the accompanying Figures. The accompanying Figures show:

Fig. 1 a diagram displaying the residual ammonia concentration after treating an aqueous ammonia sample with various adsorption granulates;

Fig. 2 a diagram displaying the pH of an aqueous ammonia sample after treatment with various clay products;

The physical features used to characterize the adsorbents according to the invention are determined as follows:

Specific surface / pore volume

Specific surface was measured by the BET-method (single-point method using nitrogen, according to DIN 66131) with an automatic nitrogen-porosimeter of Micrometrics, type ASAP 2010. The pore volume was determined using the BJH-method (E.P. Barrett, L.G. Joyner, P.P. Hienda, J. Am. Chem. Soc. 73 (1951) 373). Pore volumes of defined ranges of pore diameter were measured by summing up incremental pore volumina, which were determined from the adsorption isotherm according BJH. The total pore volume refers to pores having a diameter of 2 to 350 nm.

Moisture content

The amount of water contained in the adsorbents was determined at 105 °C according to DIN/ISO-787/2

Silicate analysis

The clay material was totally disintegrated. After dissolution of the solids the compounds were analysed and quantified by specific methods, e.g. ICP.

Ion Exchange capacity

The clay material to be tested was dried at 150 °C for two hours to obtain a dry clay material. Then the dried clay material was allowed to react under reflux with a large excess of aqueous $NH_4Cl$ solution for 1 hour. After standing at room temperature for 16 hours, the material was filtered. The filter cake was washed, dried, and ground, and the $NH_4$ content in the clay material was determined by the Kjedahl method. The amount and kind of the exchanged metal ions was determined by ICP-spectroscopy.

X-ray diffraction

The XRD spectra were measured with a powder diffractometer X'-Pert-MPD(PW 3040) (Phillips), equipped with a Cu-anode.

Determination of the sediment volume

A graduated 100 ml glass cylinder is filled with 100 ml of distilled water or with an aqueous solution of 1 % sodium carbonate and 2 % trisodium polyphosphate. 2 g of the compound to be analysed is placed on the water surface in portions of about 0.1 to 0,2 g with a spatula. After sinking down of a portion the next portion of the compound is added. After adding 2 g of the compound to be analysed the cylinder is held at room temperature for one hour. Then the sediment volume (ml/2g) is read from the graduation.

pH-Determination

A 10 wt.-% slurry of the dry clay material in destilled water is heated to the boiling point and then cooled to room temperature under a nitrogen atmosphere. The pH-value is determined with a calibrated glass-electrode.

Bulk density

A graduated cylinder which has been cut at the 1.000 ml mark is weighed to give $W_{tara}$. Then the sample is filled into the cylinder with the help of a powder funnel such that a cone is formed on top of the cylinder. The cone is removed with the help of a ruler and sample adhering to the outside of the cylinder is removed. The cylinder is then weighed again to give $W_{brutto}$. The bulk density is calculated as $d_{bulk} = W_{brutto} — W_{tara}$.

Free acidity

Approx. 5 g of the dried material (clay litter product) are boiled in a 400 ml test beaker with 250 ml water for 10 min. Subsequently, the suspension is filtered. The filter cake is washed with a small amount of water. After the filtrate has been cooled down, it is titrated with 0.1N NaOH whereby the phenolphthalein is used as indicator. The calculation of the free acidity is as follows:

$$\text{Free Acidity (mg KOH/g)} = \frac{\text{Amount NaOH (ml)} \times 5.61}{\text{Initial weight (dry basis, g)}}$$

Total acidity

Approx. 2 g of the dried material (clay litter product) are boiled in a 200 ml test beaker with 100 ml 10 wt% NaCl-solution for 10 min. Subsequently, the suspension is filtered. The filter cake is washed with a small amount of water. After the filtrate has been cooled down to room temperature (21 °C), it is titrated with 0.1N NaOH using phenolphthalein as indicator. The calculation of the total acidity is as follows:

$$\text{Total Acidity (mg KOH/g)} = \frac{\text{Amount NaOH (ml)} \times 5.61}{\text{Initial weight (dry basis, g)}}$$

Residual acidity

To obtain the residual acidity it is necessary to subtract the value of free acidity to the value of total acidity.

$$\text{Free Acidity (mg KOH/g)} = \text{Total Acidity} - \text{Free Acidity}$$

Example 1

Characterisation of the clay material

A raw clay suitable for preparation of a clay litter product for adsorption of ammonia (Tonsil® Supreme 526 FF, Sud-Chemie de Mexico S.A. de C.V.) was analysed towards its physical features. The data are presented in table 1.

Table 1: Analysis of raw clay materials

| clay material | Tonsil® Supreme 526 FF |
|---|---|
| specific surface (BET) ($m^2/g$) | 209 |
| pore volume (ml/g) | 0.593 |

(continued)

| clay material | Tonsil® Supreme 526 FF |
|---|---|
| cation exchange capacity (meq/100 g) | 50 |
| sediment volume in water (ml/2g) | < 8 |
| silicate analysis (wt.—%) | |
| $SiO_2$ | 72.5 |
| $Fe_2O_3$ | 3.0 |
| $Al_2O_3$ | 9.6 |
| CaO | 2.1 |
| MgO | 2.7 |
| $Na_2O$ | 1.1 |
| $K_2O$ | 1.1 |
| $TiO_2$ | 0.38 |
| ignition loss (2h, 1000 °C) | 6.9 |
| Total | 99.38 |

Further, the raw clay characterized in table 1 has been analysed as to its pore volume and the percentage of the pore volume formed by pores of a defined diameter. The results are summarized in tables 2a - 2c.

Table 2a: relative amount of the total pore volume formed by pores of a defined diameter (%)

| diameter (Å) | 0 - 75 | 0 - 140 | 0 - 250 | 0 - 800 | > 800 |
|---|---|---|---|---|---|
| Tonsil® Supreme 526 FF | 17.1 | 33.9 | 57.0 | 87.9 | 12.0 |

Table 2b: relative amount of the total pore volume formed by pores of a defined diameter (%)

| diameter (Å) | 0 - 75 | 75 - 140 | 140 - 250 | 250 - 800 | > 800 |
|---|---|---|---|---|---|
| Tonsil® Supreme 526 FF | 17.1 | 16.8 | 23.1 | 30.9 | 12.1 |

Table 2c: relative amount of the total pore volume formed by pores of a defined diameter (%)

| diameter (Å) | 0 -75 | 75 - 800 | >75 | >140 | >250 |
|---|---|---|---|---|---|
| Tonsil® Supreme 526 FF | 17.1 | 70.8 | 82.9 | 66.1 | 43.0 |

Example 2

Preparation of agglomeration liquids

Three agglomeration liquids for agglomerating the clay characterized in example 1 were prepared by dissolving at room temperature aluminium sulphate ($Al_2(SO_4)_3 \cdot 18\ H_2O$), ferric sulphate ($Fe_2(SO_4)_3 \cdot 9\ H_2O$) and sulphuric acid (100 %) in water with stirring in amounts as summarized in table 3.

Table 3 composition of agglomeration liquids

| Sample | 1 | 2 | 3 |
|---|---|---|---|
| Aluminium sulphate (g) | 232 | 1348 | 790 |
| Ferric sulphate (g) | 549 | 62 | 306 |

(continued)

| Sample | 1 | 2 | 3 |
|---|---|---|---|
| Sulfuric acid (g) | 138 | 138 | 138 |
| Water | 2085 | 1457 | 1771 |

Example 3

Preparation of adsorption granulate

In an Eirich mixer was placed 2.0 kg of the clay characterized in example 1. The clay was mixed for 5 minutes and then 1.4 kg of the respective agglomeration liquid described in table 3 was added over a 5 minutes period. Mixing was continued after addition of the agglomeration liquid for an additional 5 minutes and then the granulate formed was transferred into a shallow glass bowl which was then placed in an oven at 110 °C. Drying was continued until the moisture reached a level of 14 wt%. The granulate was then classified by sieving through 1.4 mm and 0.2 mm meshes.

The same procedure was performed with the comparison sample Tonsil Supreme 526 FF. As agglomeration liquid was used plain tap water.

The granulates were analyzed according to standard analytic methods. The obtained data are summarized in table 4.

Table 4: Analysis of adsorption granulates

| Sample | 1 | 2 | 3 | Tonsil® Supreme 526 FF |
|---|---|---|---|---|
| Specific surface area ($m^2/g$) | 80 | 65 | 66 | 195 |
| Total pore volume (ml/g) | 0.288 | 0.244 | 0.265 | 0.520 |
| pH | 1.6 | 2.3 | 1.7 | 8.0 |
| Free acidity (mg KOH/g) | 115.5 | 120.1 | 130.4 | 0 |
| Residual acidity (mg KOH/g) | 5.0 | 10.8 | 15.2 | 0 |
| Moisture (wt%) | 14.2 | 14.0 | 14.3 | 12.5 |

Example 4

Adsorption of ammonia from aqueous solutions

Determination of pH and ammonia concentration

pH was determined with a calibrated glass-electrode. Ammonia concentration was determined with an ammonia selective electrode. Calibration of the ammonia selective electrode resulted in an exactness of $R^2 = 0.9995$ within the pH-range analyzed. Both electrodes were connected to a KM2000 multi channel measuring apparatus.

Adsorption experiments

4.5 ml of an aqueous ammonia solution (1 mol/1) were added to 95.5 ml demineralised water. 0.5 mg of the adsorption granulate characterized in table 4 were added to the solution. Ammonia concentration and pH were determined after defined periods of time. The experiments were done with stirring.

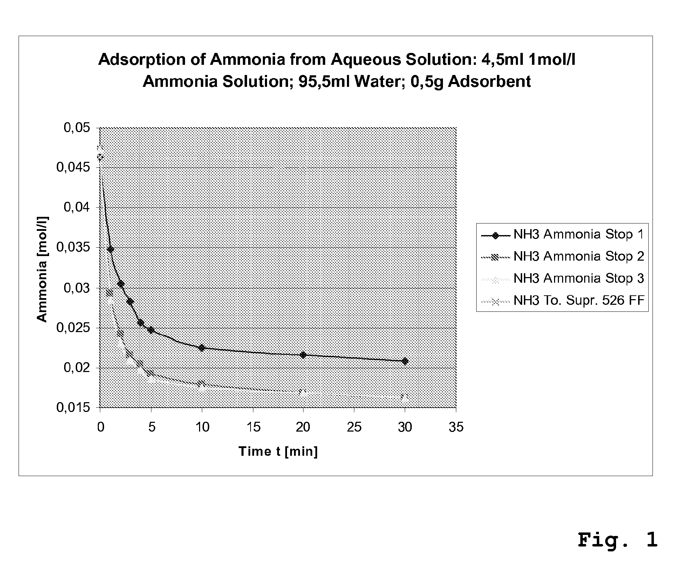

Residual ammonia concentrations determined in an aqueous sample after treatment with adsorption granulates are summarized in table 5. Data are also displayed in fig. 1.

Table 5: residual ammonia concentration (mol/1) in an aqueous sample after treatment with adsorption granulates with stirring

| Time (min) | 1 | 2 | 3 | Tonsil® Supreme 526 FF |
|---|---|---|---|---|
| 0 | 0.047 | 0.047 | 0.047 | 0.047 |

(continued)

| Time (min) | 1 | 2 | 3 | Tonsil® Supreme 526 FF |
|---|---|---|---|---|
| 1 | 0.035 | 0.0295 | 0.0285 | 0.047 |
| 2 | 0.031 | 0.0245 | 0.023 | 0.047 |
| 3 | 0.028 | 0.022 | 0.021 | 0.047 |
| 4 | 0.026 | 0.021 | 0.0195 | 0.047 |
| 5 | 0.025 | 0.0195 | 0.0185 | 0.047 |
| 10 | 0.023 | 0.018 | 0.0175 | 0.047 |
| 20 | 0.022 | 0.0165 | 0.016 | 0.044 |
| 30 | 0.021 | 0.016 | 0.016 | 0.044 |

The amount of ammonia adsorbed from the aqueous ammonia samples after 30 minutes is summarized in table 6.

Table 6: amount of ammonia adsorbed after 30 min from an aqueous sample

| Adsorbent | 1 | 2 | 3 | Tonsil® Supreme 526 FF |
|---|---|---|---|---|
| $NH_3$ (mol/l) | 0.0256 | 0.0311 | 0.0311 | 0.0017 |
| Ammonia red. (%) | 55.5 | 65.7 | 65.7 | 3.75 |

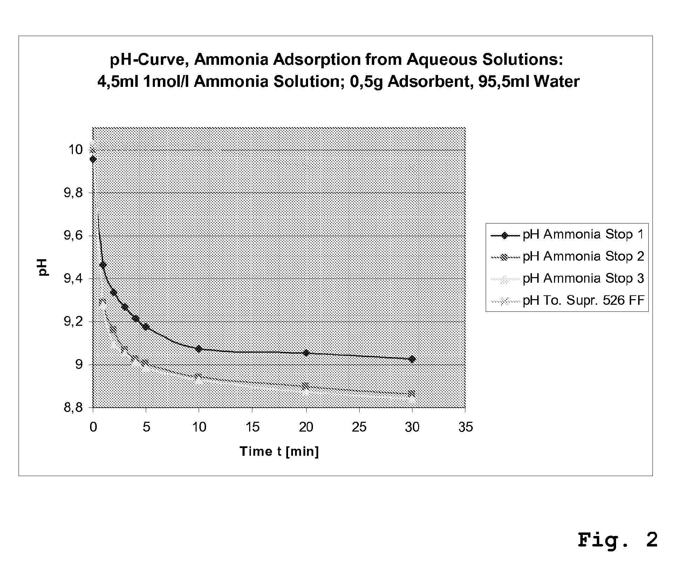

All adsorption granulates according to the invention achieved a reduction in ammonia concentration from an initial concentration of about 0.046 mol/1 to below 0.025 mol/1. pH of the samples treated with adsorption granulates according to the invention was lowered significantly whereas in the comparison examples a strong alkaline pH was observed. The pH measured during treatment of the ammonia samples is summarized in table 7 and displayed in fig. 2.

Table 7: pH determined during treatment of an aqueous ammonia sample with adsorption granulates

| Time (min) | 1 | 2 | 3 | Tonsil® Supreme 526 FF |
|---|---|---|---|---|
| 0 | 9.95 | 10.0 | 10.0 | 10.0 |
| 1 | 9.48 | 9.30 | 9.30 | 10.0 |
| 2 | 9.35 | 9.17 | 9.10 | 10.0 |
| 3 | 9.28 | 9.08 | 9.06 | 10.0 |
| 4 | 9.21 | 9.03 | 9.00 | 10.0 |
| 5 | 9.18 | 9.00 | 8.90 | 10.0 |
| 10 | 9.08 | 8.95 | 8.93 | 10.0 |
| 20 | 9.05 | 8.90 | 8.87 | 9.93 |
| 30 | 9.02 | 8.88 | 8.85 | 9.93 |

Example 5

Control; treatment of water with adsorption granulates

To determine the influence of the adsorbent on the pH of the sample, 0.5 g of the adsorbent granulates were added to 100 ml demineralised water and the pH was measured after 10 min stirring. With all adsorbent according to the invention a significant lowering of the pH of the samples was observed. The pH measured is summarized in table 8:

Table 8: pH of aqueous samples after treatment with adsorbent granulates according to the invention

| Sample | 1 | 2 | 3 |
|---|---|---|---|
| pH | 2.89 | 3.47 | 3.03 |

Example 6

Adsorption of ammonia from the gas phase

1 g of adsorbent was weighed into a beaker fitted with a screw cap. 55 μl of 30 % ammonia solution diluted 1: 1 by distilled water was added and the beaker closed immediately. After 10 minutes reaction time at about 30 °C the ammonia concentration in the beaker gas volume was determined by means of an ammonia sensor. The sensor used for determination the ammonia concentration had an upper limit of 200 ppm. The data are summarized in table 9.

Table 9: residual ammonia concentration (ppm) after 10 min treatment of the gas phase with 1 g adsorbent

| Adsorbent | 1 | 2 | 3 | Tonsil® Supreme 526 FF |
|---|---|---|---|---|
| $NH_3$ (ppm) | 103 | 108 | 104 | >200[1] |
| [1] exceeded maximal concentration detectable by sensor | | | | |

All adsorbents according to the invention effected a significant reduction in ammonia concentration. Treatment of the gas phase with comparison sample Tonsil® Supreme 526 FF resulted in an ammonia concentration exceeding the range of the sensor, i.e. the concentration was higher than 200 ppm.

**Claims**

1. Clay litter product comprising a clay material and a mixture of acid and at least an aluminium salt deposited thereon.

2. Clay litter product according to claim 1, wherein further an iron salt is deposited on the clay.

3. Clay litter product according to one of claims 1 and 2, wherein the aluminium salt and/or the iron salt is a salt of the acid deposited on the clay.

4. Clay litter product according to one of claims 1 to 3, wherein is acid is a mineral acid, preferably selected from the group of hydrochloric acid, sulfuric acid and phosphoric acid.

5. Clay litter product according to one of claims 1 to 4, wherein the aluminium salt is deposited in an amount of at least 0.5 wt% referenced to the basis of the dry weight of the clay and calculated as $Al_2O_3$.

6. Clay litter product according to one of claims 1 to 5, wherein the iron salt is deposited in an amount of at least 0.1 wt%, referenced to the basis of the dry weight of the clay and calculated as $Fe_2O_3$.

7. Clay litter product according to one of claims 1 to 6, wherein the clay material comprised in the clay litter product as a specific surface area of at least 180 $m^2$/g.

8. Clay litter product according to one of claims 1 to 7, wherein the clay material comprised in the clay litter product has a pore volume of at least 0.5 ml/g.

9. Clay litter product according to one of claims 1 to 8, wherein the clay litter product has a granular form, wherein the granules preferably have an average diameter of at least 2 mm.

10. Method for producing a clay litter product according to one of claims 1 to 9, wherein

    - a clay is provided,
    - an acid is deposited onto the clay, and

- an aluminium salt is deposited onto the clay.

**11.** Method according to claim 10, wherein an iron salt is deposited on the clay.

**12.** Use of a clay litter product according to one of claims 1 to 9 for adsorption of basic compounds.

**13.** Use according to claim 12, wherein the basic compound is present in a concentration within a range of 1 to 100 ppm.

**14.** Use according to one of claims 12 or 13, wherein the basic compound is produced in animal breeding.

**15.** Use according to claim 14, wherein the clay litter is applied to a pen floor surface in an amount of 50 to 750 $g/m^2$.

Adsorption of Ammonia from Aqueous Solution: 4,5ml 1mol/l Ammonia Solution; 95,5ml Water; 0,5g Adsorbent
Ammonia [mol/l]
0,05
0,045
0,04
0,035
0,03
0,025
0,02
0,015
0
5
10
15
20
25
30
35
Time t [min]
NH3 Ammonia Stop 1
NH3 Ammonia Stop 2
NH3 Ammonia Stop 3
NH3 To. Supr. 526 FF

Fig. 1

pH-Curve, Ammonia Adsorption from Aqueous Solutions:
4,5ml 1mol/l Ammonia Solution; 0,5g Adsorbent, 95,5ml Water
pH
10
9,8
9,6
9,4
9,2
9
8,8
0
5
10
15
20
25
30
35
Time t [min]
pH Ammonia Stop 1
pH Ammonia Stop 2
pH Ammonia Stop 3
pH To. Supr. 526 FF

Fig. 2

Europäisches Patentamt
European Patent Office
Office européen des brevets

# EUROPEAN SEARCH REPORT

Application Number
EP 10 16 0306

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 032 549 A (LANG RUDIGER [DE] ET AL) 16 July 1991 (1991-07-16)<br>* claims 1,6,11 *<br>* column 2, line 3 - line 11 *<br>* column 3, line 7 - line 8 *<br>* column 3, line 12 - line 15 *<br>* example II *<br>* column 4, line 10 - line 15 *<br>----- | 1-15 | INV.<br>B01J20/12<br>B01J20/14<br>B01J20/32<br>A01K1/015 |
| X | US 5 176 879 A (WHITE MICHAEL P [US] ET AL) 5 January 1993 (1993-01-05)<br>* column 1, line 46 - line 48 *<br>* column 1, line 49 - line 59 *<br>* column 1, line 60 - line 64 *<br>* column 2, line 22 - line 34 *<br>* column 2, line 35 - line 43 *<br>* column 2, line 53 - line 65 *<br>* column 3, line 16 - line 23 *<br>* column 3, line 65 - column 4, line 2 *<br>* column 3, line 40 - line 45 *<br>* EXAMPLE(column 3)& Table(column 4) *<br>* claim 1 *<br>----- | 1-15 | TECHNICAL FIELDS SEARCHED (IPC)<br>B01J<br>A01K |
| X | US 5 869 415 A (ORTIZ JOSE ANTONIO [MX] ET AL) 9 February 1999 (1999-02-09)<br>* claims 1,5,8,9,11 *<br>* column 2, line 65 - line 67 *<br>* column 3, line 39 - line 47 *<br>----- | 1-11 | |
| X | EP 1 748 086 A1 (SUED CHEMIE AG [DE]) 31 January 2007 (2007-01-31)<br>* paragraphs [0020], [0024], [0026] *<br>* example 1 *<br>* claims 1,2,12,15 *<br>----- | 1-11 | |

The present search report has been drawn up for all claims

1

| Place of search | Date of completion of the search | Examiner |
|---|---|---|
| The Hague | 29 June 2010 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 16 0306

This annex lists the patent family members relating to the patent documents cited in the above-mentioned European search report. The members are as contained in the European Patent Office EDP file on
The European Patent Office is in no way liable for these particulars which are merely given for the purpose of information.

29-06-2010

| Patent document cited in search report | Publication date | Patent family member(s) | Publication date |
|---|---|---|---|
| US 5032549 A | 16-07-1991 | AU 571060 B2 | 31-03-1988 |
| | | AU 3936185 A | 15-11-1985 |
| | | DE 3414965 A1 | 02-01-1986 |
| | | WO 8504862 A1 | 07-11-1985 |
| | | EP 0182793 A1 | 04-06-1986 |
| | | JP 3072035 B | 15-11-1991 |
| | | JP 61501907 T | 04-09-1986 |
| | | US 4824810 A | 25-04-1989 |
| US 5176879 A | 05-01-1993 | NONE | |
| US 5869415 A | 09-02-1999 | NONE | |
| EP 1748086 A1 | 31-01-2007 | CN 101243194 A | 13-08-2008 |
| | | EC SP088205 A | 26-03-2008 |
| | | WO 2007017102 A1 | 15-02-2007 |
| | | US 2009050135 A1 | 26-02-2009 |
| | | ZA 200800971 A | 29-04-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5960743 A
- WO 2006131136 A
- WO 2008055675 A1

### Non-patent literature cited in the description

- **E.P. BARRETT ; L.G. JOYNER ; P.P. HIENDA.** *J. Am. Chem. Soc.,* 1951, vol. 73, 373